# EUROPÄISCHE PATENTSCHRIFT

(11) **EP 3 321 064 B1**
(45) Veröffentlichungstag und Bekanntmachung des Hinweises auf die Patenterteilung: **02.03.2022**
(21) Anmeldenummer: 17178625.4
(22) Anmeldetag: 29.06.2017
(51) Int. Cl.: B29C 64/153, B29C 64/393, B22F 10/20, B22F 12/00, B29C 64/20, B33Y 50/00, B33Y 30/00

(54) **VORRICHTUNG ZUR ADDITIVEN HERSTELLUNG DREIDIMENSIONALER OBJEKTE**
APPARATUS FOR ADDITIVELY MANUFACTURING OF THREE-DIMENSIONAL OBJECTS
DISPOSITIF DE FABRICATION ADDITIVE D'OBJETS TRIDIMENSIONNELS

(30) Priorität: 14.11.2016 DE 102016121803
(43) Veröffentlichungstag der Anmeldung: 16.05.2018
(73) Patentinhaber: CL Schutzrechtsverwaltungs GmbH, 96215 Lichtenfels (DE)
(72) Erfinder: Stammberger, Jens, 96472 Rödental (DE); Winiarski, Daniel, 96231 Bad Staffelstein (DE); Diller, Christian, 96215 Lichtenfels (DE); Hetzel, Ralf, 96231 Bad Staffelstein (DE)
(74) Vertreter: Hafner & Kohl PartmbB

(56) Entgegenhaltungen:
- WO-A1-2015/003937
- WO-A1-2016/094827
- WO-A2-2015/040433
- US-A1- 2015 177 158

## Beschreibung

Die Erfindung betrifft eine Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels Laserstrahlung verfestigbaren Baumaterial in einer vorrichtungsseitigen Prozesskammer, umfassend eine Belichtungseinrichtung, welche zur Erzeugung von Laserstrahlung zur selektiven Belichtung und damit einhergehenden selektiven Verfestigung jeweiliger Baumaterialschichten eingerichtet ist.

Derartige Vorrichtungen zur additiven Herstellung dreidimensionaler Objekte sind an und für sich bekannt. Beispiele entsprechender Vorrichtungen sind Vorrichtungen zur Durchführung selektiver Lasersinterverfahren (SLS-Verfahren) und Vorrichtungen zur Durchführung selektiver Laserschmelzverfahren (SLM-Verfahren).

Es ist bekannt, dass im Rahmen des Betriebs entsprechender Vorrichtungen Laserstrahlung, insbesondere von einer Bauebene reflektierte Sekundärstrahlung, auf Prozesskammerbegrenzungselemente, d. h. insbesondere Prozesskammerwandungselemente treffen kann, was ein potentielles Sicherheitsrisiko darstellen kann.

Bis dato wird diesem potentiellen Sicherheitsrisiko typischerweise durch eine gezielte Verstärkung entsprechender Prozesskammerbegrenzungselemente, d. h. insbesondere eine gezielte Erhöhung der Wandstärke entsprechender Prozesskammerwandungselemente, begegnet. Eine aktive Erfassung von auf Prozesskammerbegrenzungselemente treffender Laserstrahlung ist nicht vorgesehen.

WO 2016/094827 A1, WO 2015/040433 A1, US 2015/177158 A1 und WO 2015/003937 A1 offenbaren jeweils additive Fertigungseinrichtungen, welche mit Erfassungseinrichtungen zur Erfassung von Erfassungsgrößen ausgestattet sein können.

Der Erfindung liegt die Aufgabe zugrunde, eine demgegenüber verbesserte Vorrichtung zur additiven Herstellung dreidimensionaler Objekte anazugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die Erfindung ist durch die Gegenstände der Ansprüche definiert. Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem vermittels Laserstrahlung verfestigbaren Baumaterial in den dem schichtbezogenen Querschnitt des herzustellenden Objekts entsprechenden Bereichen eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung und eine Belichtungseinrichtung. Die Beschichtungseinrichtung ist zur Ausbildung selektiv zu belichtender bzw. selektiv zu verfestigender Baumaterialschichten in einer Bauebene der Vorrichtung, in welcher die sukzessive schichtweise selektive Belichtung und die damit einhergehende sukzessive schichtweise selektive Verfestigung von Baumaterialschichten aus dem vermittels Laserstrahlung verfestigbaren Baumaterial erfolgt, eingerichtet. Die Belichtungseinrichtung ist zur selektiven Belichtung selektiv zu verfestigender Baumaterialschichten in der Bauebene der Vorrichtung vermittels Laserstrahlung eingerichtet.

Die Belichtungseinrichtung umfasst typischerweise eine Strahlerzeugungseinrichtung, welche zur Erzeugung von Laserstrahlung, d. h. eines Laserstrahls eingerichtet ist, gegebenenfalls eine Strahlablenkeinrichtung (Scannereinrichtung), welche zur Ablenkung eines von der Strahlerzeugungseinrichtung erzeugten Energie- bzw. Laserstrahls auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc.

Die genannten Funktionskomponenten der Vorrichtung sind typischerweise an oder in einer inertisierbaren Prozesskammer der Vorrichtung angeordnet oder ausgebildet. Die Prozesskammer ist räumlich-körperlich durch Prozesskammerbegrenzungselemente, kurz Prozesskammerbegrenzungen, begrenzt bzw. definiert. Bei entsprechenden Prozesskammerbegrenzungselementen kann es sich insbesondere um Prozesskammerwandungselemente, kurz Prozesskammerwandungen, handeln. Die Prozesskammer umfasst typischerweise Andockschnittstellen, welche zum Andocken von Pulvermodulen, d. h. z. B. Bau-, Dosier- oder Überlaufmodulen, eingerichtet sind.

Konkret kann es ein Prozesskammerbegrenzungselement ein die Prozesskammer abschnittsweise begrenzendes Prozesskammerwandungselement oder ein einen Einblick in die Prozesskammer ermöglichendes Prozesskammerfensterelement oder ein eine Zugangsmöglichkeit in die Prozesskammer schaffendes, insbesondere zwischen einer Offen- und einer Schließstellung, bewegbar, insbesondere schwenkbewegbar, gelagertes Prozesskammertürelement sein. Ein entsprechendes Prozesskammerfensterelement kann ein Bestandteil eines entsprechenden Prozesskammerwandungselements oder eines entsprechenden Prozesskammertürelements sein.

Die Vorrichtung umfasst eine Erfassungseinrichtung, welche zur Erfassung des

Eindringens von Laserstrahlung in ein die Prozesskammer zumindest abschnittsweise begrenzendes Prozesskammerbegrenzungselement und/oder zur Erfassung des Durchdringens von Laserstrahlung durch ein die Prozesskammer zumindest abschnittsweise begrenzendes Prozesskammerbegrenzungselement eingerichtet ist. Die von der Belichtungseinrichtung ausgehende Primärstrahlung kann im Rahmen der Durchführung additiver Bauvorgänge derart reflektiert werden, dass diese zumindest abschnittsweise in ein die Prozesskammer zumindest abschnittsweise begrenzendes Prozesskammerbegrenzungselement eindringt bzw. dieses zumindest abschnittsweise durchdringt. Bei der über die Erfassungseinrichtung erfassbaren Laserstrahlung handelt es sich sonach typischerweise um, z. B. von einem bereits hergestellten Objekteabschnitt, reflektierte Sekundärstrahlung. Die Erfassungseinrichtung ermöglicht eine aktive Erfassung des zumindest abschnittsweisen Eindringens von Laserstrahlung in entsprechende Prozesskammerbegrenzungselemente und/oder des zumindest abschnittsweisen Durchdringens von Laserstrahlung durch entsprechende Prozesskammerbegrenzungselemente, mithin eine aktive Erfassung von auf einzelne, mehrere oder sämtliche Prozesskammerbegrenzungselemente treffender Laserstrahlung. Die Erfassungseinrichtung stellt damit eine Maßnahme zur Erhöhung der Sicherheit der Vorrichtung dar.

Die Erfassungseinrichtung umfasst wenigstens ein Erfassungselement, d. h. gegebenenfalls mehrere Erfassungselemente. Konkrete Beispiele entsprechender Erfassungselemente werden nachfolgend gegeben:
Ein jeweiliges Erfassungselement kann zur (direkten oder indirekten) Erfassung von in ein Prozesskammerbegrenzungselement eindringender und/oder von ein Prozesskammerbegrenzungselement durchdringender Laserstrahlung, insbesondere von Laserstrahlung bestimmter Strahlungseigenschaften, bevorzugt einer bestimmten Wellenlänge, eingerichtet sein. Ein jeweiliges Erfassungselement kann z. B. als eine, gegebenenfalls lichtleitende Strukturelemente umfassende, Sensorik zur Erfassung von Laserstrahlung, insbesondere Laserstrahlung bestimmter Strahlungseigenschaften, bevorzugt einer bestimmten Wellenlänge, ausgebildet sein.

Ein jeweiliges Erfassungselement kann auch zur Erfassung einer laserstrahlungsbedingt abschnittsweise veränderlichen physikalischen Eigenschaft, insbesondere einer laserstrahlungsbedingt abschnittsweise veränderlichen elektrischen oder thermischen Eigenschaft, eines Prozesskammerbegrenzungselements eingerichtet sein. Ein jeweiliges Erfassungselement kann z. B. als eine Sensorik zur Erfassung von Änderungen der elektrischen Eigenschaften, insbesondere der Leitfähigkeit, oder von Änderungen der thermischen Eigenschaften, insbesondere der Temperatur, eines Prozesskammerbegrenzungselements ausgebildet sein. Änderungen bestimmter physikalischer Eigenschaften eines Prozesskammerbegrenzungselements, d. h. z. B. Änderungen der elektrischen bzw. thermischen Eigenschaften, deuten auf ein (potentielles) Eindringen von Laserstrahlung in ein Prozesskammerbegrenzungselement bzw. ein (potentielles) Durchdringen von Laserstrahlung durch ein Prozesskammerbegrenzungselement hin bzw. zeigen ein solches an.

Ein jeweiliges Erfassungselement kann auch zur Erfassung einer aus einem laserstrahlungsbedingten Materialabtrag eines Prozesskammerbegrenzungselements veränderlichen Atmosphäre innerhalb der Prozesskammer eingerichtet sein. Ein jeweiliges Erfassungselement kann z. B. als eine Sensorik zur Erfassung einer aus einem laserstrahlungsbedingten Materialabtrag eines Prozesskammerbegrenzungselements veränderlichen Atmosphäre bzw. veränderlichen atmosphärischen Zusammensetzung innerhalb der Prozesskammer eingerichtet sein. Änderungen der Atmosphäre, z. B. durch einen Anstieg der Konzentration von bestimmten aus einem entsprechenden Materialabtrag von einem Prozesskammerbegrenzungselement resultierenden Elementen, deuten auf ein (potentielles) Eindringen von Laserstrahlung in ein Prozesskammerbegrenzungselement bzw. ein (potentielles) Durchdringen von Laserstrahlung durch ein Prozesskammerbegrenzungselement hin bzw. zeigen ein solches an.

Ein jeweiliges Erfassungselement kann auch zur Erfassung von aus einem laserstrahlungsbedingten Materialabtrag eines Prozesskammerbegrenzungselements entstehenden Partikeln, insbesondere Prozesskammerbegrenzungselementpartikeln, eingerichtet sein. Ein jeweiliges Erfassungselement kann z. B. als eine Sensorik zur Erfassung von aus einem laserstrahlungsbedingten Materialabtrag eines Prozesskammerbegrenzungselements entstehenden Partikeln, insbesondere Prozesskammerbegrenzungselementpartikeln, (unabhängig von einer damit etwaig einhergehenden Änderung der Atmosphäre innerhalb der Prozesskammer) eingerichtet sein. Erfasste, aus einem laserstrahlungsbedingten Materialabtrag eines Prozesskammerbegrenzungselements entstehende Partikeln deuten ebenso auf ein (potentielles) Eindringen von Laserstrahlung in ein Prozesskammerbegrenzungselement bzw. ein (potentielles) Durchdringen von Laserstrahlung durch ein Prozesskammerbegrenzungselement hin bzw. zeigen ein solches an.

Ein jeweiliges Erfassungselement kann direkt an oder in einem Prozesskammerbegrenzungselement angeordnet oder ausgebildet sein.

Dabei ist es z. B. denkbar, dass ein Erfassungselement an einer dem durch die Prozesskammer begrenzten Innenraum zugewandten Innenfläche eines Prozesskammerbegrenzungselements angeordnet oder ausgebildet ist oder an einer dem durch die Prozesskammer begrenzten Innenraum abgewandten, insbesondere freiliegenden, Außenfläche eines Prozesskammerbegrenzungselements angeordnet oder ausgebildet ist. Ein Erfassungselement kann sonach an einer entsprechenden Innen- oder Außenfläche eines Prozesskammerbegrenzungselements angeordnet oder ausgebildet sein, was eine vergleichsweise einfache Anbringungsmöglichkeit eines Erfassungselements (unabhängig von dessen geometrisch-konstruktiver Gestalt) darstellt, welche gegebenenfalls auch ein Nachrüsten von ursprünglich nicht mit einer Erfassungseinrichtung ausgestatteten Vorrichtungen ermöglicht.

Ist ein Erfassungselement in einem Prozesskammerbegrenzungselement angeordnet oder ausgebildet, ist das Erfassungselement in einem zumindest abschnittsweise einen mehrlagigen Aufbau aufweisenden Prozesskammerbegrenzungselement angeordnet oder ausgebildet ist, wobei es als Zwischenlage zwischen zwei Außenlagen des Prozesskammerbegrenzungselements in dem Prozesskammerbegrenzungselement angeordnet oder ausgebildet ist. Das Erfassungselement kann sonach direkt in das Prozesskammerbegrenzungselement integriert sein, wodurch es vor äußeren Einflüssen geschützt ist. Das Erfassungselement weist hierfür insbesondere eine flache bzw. flächige geometrisch-konstruktive Gestalt auf.

Alternativ oder ergänzend zu einer direkten Anordnung oder Ausbildung eines Erfassungselements an oder in einem Prozesskammerbegrenzungselement angeordnet oder ausgebildet, kann ein Erfassungselement an oder in einer als gesonderte Bauteilgruppe an oder in einem Prozesskammerbegrenzungselement anordenbaren bzw. angeordneten, insbesondere gehäuseartigen bzw. -förmigen, Tragstruktur angeordnet oder ausgebildet sein. Eine Tragstruktur kann im einfachsten Fall eine Art Gehäuse bilden, an oder in welchem wenigstens ein Erfassungselement angeordnet oder ausgebildet ist. In die Tragstruktur können weitere Bestandteile der Erfassungseinrichtung, d. h. z. B. Anschlussschnittstellen, z. B. zum Anschluss einer Energieversorgung, Datenübertragungsschnittstellen, z. B. zur Übertragung, d. h. zum Senden und/oder Empfangen von Daten, etc., integriert sein.

Eine jeweilige Tragstruktur kann z. B. an einer dem durch die Prozesskammer begrenzten Innenraum zugewandten, insbesondere freiliegenden, Innenfläche eines Prozesskammerbegrenzungselements angeordnet oder ausgebildet ist oder an einer dem durch die Prozesskammer begrenzten Innenraum abgewandten, insbesondere freiliegenden, Außenfläche eines Prozesskammerbegrenzungselements angeordnet oder ausgebildet sein. Eine Tragstruktur kann sonach an einer entsprechenden Innen- oder Außenfläche eines Prozesskammerbegrenzungselements angeordnet oder ausgebildet sein, was eine vergleichsweise einfache Anbringungsmöglichkeit einer Tragstruktur (unabhängig von deren geometrisch-konstruktiver Gestalt) darstellt, welche gegebenenfalls auch ein Nachrüsten von ursprünglich nicht mit einer Erfassungseinrichtung ausgestatteten Vorrichtungen ermöglicht.

Eine jeweilige Tragstruktur weist zumindest abschnittsweise einen mehrlagigen Aufbau auf, wobei das oder wenigstens ein Erfassungselement als Zwischenlage zwischen zwei Außenlagen der Tragstruktur in der Tragstruktur angeordnet oder ausgebildet ist. Mithin kann ein Erfassungselement in einer zumindest abschnittsweise einen mehrlagigen Aufbau aufweisenden Tragstruktur angeordnet oder ausgebildet sein, wobei es, insbesondere als Zwischenlage, zwischen zwei Außenlagen der Tragstruktur in der Tragstruktur angeordnet oder ausgebildet ist, wodurch es vor äußeren Einflüssen geschützt ist. Das Erfassungselement weist hierfür wiederum insbesondere eine flache bzw. flächige geometrisch-konstruktive Gestalt auf.

Die Erfassungseinrichtung kann (datenübertragungsmäßig) mit einer den Betrieb der Belichtungseinrichtung und/oder der (gesamten) Vorrichtung steuernden Steuereinrichtung kommunizieren, wobei die Erfassungseinrichtung bei Erfassung eines Eindringens von Laserstrahlung in ein die Prozesskammer zumindest abschnittsweise begrenzendes Prozesskammerbegrenzungselement und/oder bei Erfassung eines zumindest abschnittsweisen Durchdringens von Laserstrahlung durch ein die Prozesskammer zumindest abschnittsweise begrenzendes Prozesskammerbegrenzungselement zur Erzeugung einer Erfassungsinformation und zur Kommunikation dieser an die Steuereinrichtung eingerichtet ist. Sowohl seitens der Erfassungseinrichtung als auch seitens der Steuereinrichtung sind geeignete Kommunikationsschnittstellen vorhanden, welche eine Übertragung von Erfassungsinformationen von der Erfassungseinrichtung an die Steuereinrichtung ermöglichen.

Die Steuereinrichtung kann eingerichtet sein, bei Erhalt einer entsprechenden Erfassungsinformation (sofort) wenigstens eine Maßnahme zur Verhinderung des Eindringens von Laserstrahlung in das die Prozesskammer zumindest abschnittsweise begrenzende Prozesskammerbegrenzungselement und/oder zur Verhinderung des zumindest abschnittsweisen Durchdringens von Laserstrahlung durch das die Prozesskammer zumindest abschnittsweise begrenzende Prozesskammerbegrenzungselement durchzuführen. Bei einer entsprechenden Maßnahme kann es sich insbesondere um ein Reduzieren der Leistung der von der Belichtungseinrichtung erzeugten Laserstrahlung oder um ein Abschalten der Belichtungseinrichtung oder um ein Abschalten der gesamten Vorrichtung handeln.

Die Erfassungseinrichtung kann mit einer Ausgabeeinrichtung zur Ausgabe von Informationen, insbesondere an einen Benutzer, kommunizieren, wobei die Erfassungseinrichtung bei Erfassung eines Eindringens von Laserstrahlung in ein die Prozesskammer zumindest abschnittsweise begrenzendes Prozesskammerbegrenzungselement und/oder bei Erfassung eines zumindest abschnittsweisen Durchdringens von Laserstrahlung durch ein die Prozesskammer zumindest abschnittsweise begrenzendes Prozesskammerbegrenzungselement zur Erzeugung einer Erfassungsinformation und zur Kommunikation dieser an die Ausgabeeinrichtung eingerichtet ist. Die Erfassungseinrichtungs- und/oder die Ausgabeeinrichtung können eingerichtet sein, eine die Erfassungsinformation betreffende Warninformation zu erzeugen und an einen Benutzer auszugeben.

Unter einer Ausgabe entsprechender Informationen kann eine direkte Ausgabe von die jeweilige Information betreffender, insbesondere akustischer und/oder optischer Signale, an einen Benutzer zu verstehen sein, wozu die Vorrichtung über geeignete Signalausgabeeinrichtungen, d. h. z. B. Anzeigeeinrichtungen, Lautsprechereinrichtungen, etc., verfügt. Unter einer Ausgabe entsprechender Informationen kann auch eine, insbesondere funkbasierte, Übertragung jeweiliger Informationen an wenigstens ein benutzerseitiges (mobiles) Endgerät, d. h. z. B. einen Computer, ein Handy, ein Smartphone, ein Tablet-PC, etc., zu verstehen sein, wozu die Vorrichtung über geeignete Datenübertragungsschnittstellen, d. h. z. B. Sendeeinrichtungen, verfügt.

Die Erfindung ist anhand von Ausführungsbeispielen in den Zeichnungsfiguren näher erläutert. Dabei zeigen:
- Fig. 1: eine Prinzipdarstellung eine Vorrichtung gemäß einem Ausführungsbeispiel;
- Fig. 2, 3: je einen Ausschnitt der in Fig. 1 gezeigten Vorrichtung.

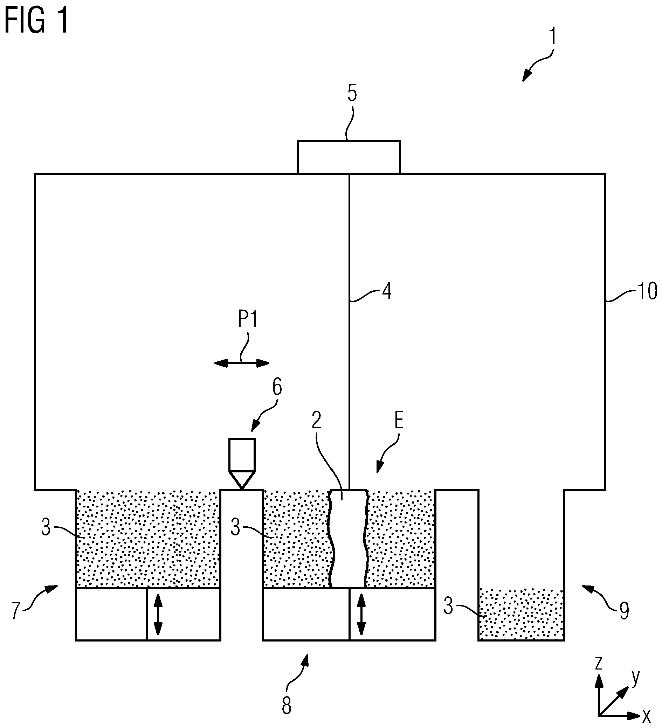

Fig. 1 zeigt eine Prinzipdarstellung einer Vorrichtung 1 gemäß einem Ausführungsbeispiel der Vorrichtung 1.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels Laserstrahlung, vgl. Laserstrahl 4. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann als Laser-CUSING^{®}-Vorrichtung, d. h. als Vorrichtung zur Durchführung selektiver Laserschmelzverfahren, ausgebildet sein.

Die Vorrichtung 1 umfasst die zur Durchführung additiver Bauvorgänge erforderlichen Funktionskomponenten; in Fig. 1 ist beispielsweise eine Beschichtungseinrichtung 5 und eine Belichtungseinrichtung 6 gezeigt.

Die Beschichtungseinrichtung 5 ist zur Ausbildung selektiv zu belichtender bzw. selektiv zu verfestigender Baumaterialschichten in einer Bauebene E der Vorrichtung 1 eingerichtet. Die Beschichtungseinrichtung 5 umfasst eine mehrere Beschichterelemente umfassende Beschichterelementbaugruppe (nicht näher bezeichnet), welche über eine Führungseinrichtung (nicht gezeigt) in, wie durch den Doppelpfeil P1 angedeutet, horizontaler Richtung bewegbar gelagert ist.

Die Belichtungseinrichtung 6 ist zur selektiven Belichtung selektiv zu verfestigender Baumaterialschichten in der Bauebene E der Vorrichtung 1 eingerichtet und umfasst hierfür eine Strahlerzeugungseinrichtung (nicht gezeigt), welche zur Erzeugung eines Laserstrahls 4 eingerichtet ist, gegebenenfalls eine Strahlablenkeinrichtung (nicht gezeigt), welche zur Ablenkung eines von der Strahlerzeugungseinrichtung erzeugten Laserstrahls 5 auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc.

In Fig. 1 ist ferner ein Dosiermodul 7, ein Baumodul 8 und ein Überlaufmodul 9 dargestellt, welche an einen unteren Bereich einer intertisierbaren Prozesskammer 10 der Vorrichtung 1 angedockt sind. Die genannten Module können auch einen unteren Bereich der Prozesskammer 10 bilden.

Die Prozesskammer 10 ist durch einzelne Prozesskammerbegrenzungs- bzw. Prozesskammerwandungselemente (nicht näher bezeichnet), begrenzt.

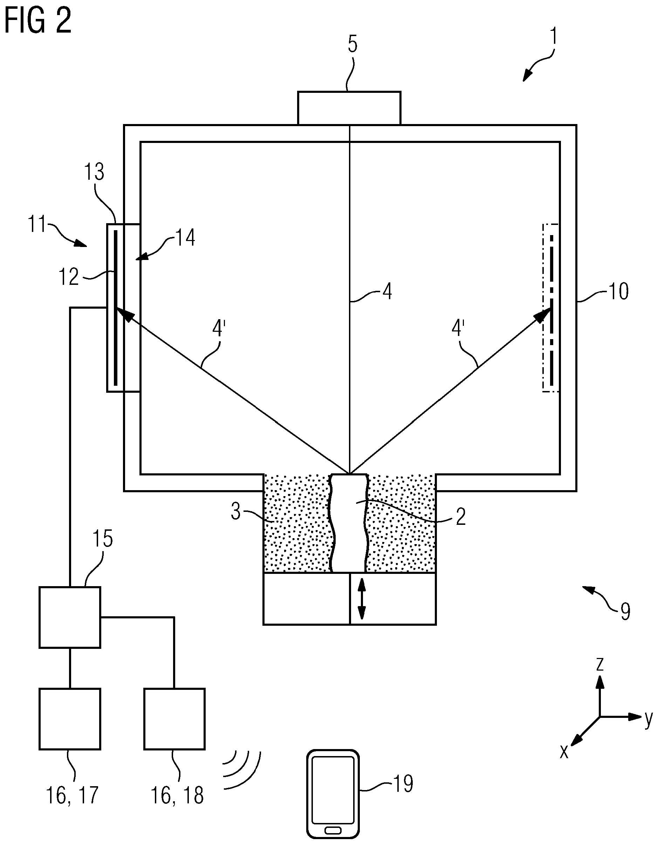

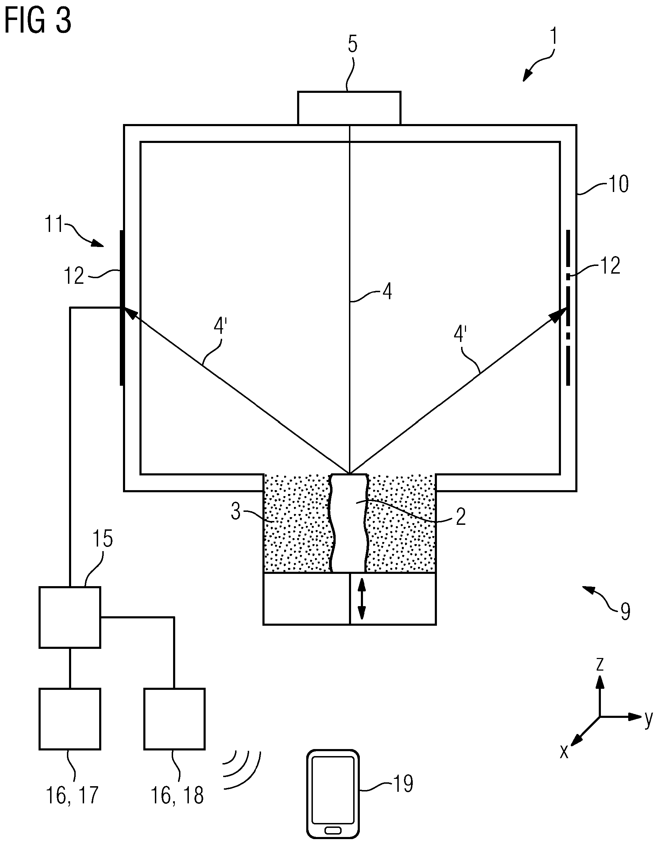

Die Vorrichtung 1 umfasst eine - lediglich in den Fig. 2, 3 dargestellte, gleichwohl auch bei der in Fig. 1 gezeigten Vorrichtung 1 vorhandene - Erfassungseinrichtung 11, welche zur Erfassung des Eindringens von Laserstrahlung in ein die Prozesskammer 10 zumindest abschnittsweise begrenzendes Prozesskammerbegrenzungselement und/oder zur Erfassung des Durchdringens von Laserstrahlung durch ein die Prozesskammer 10 zumindest abschnittsweise begrenzendes Prozesskammerbegrenzungselement eingerichtet ist. Die von der Belichtungseinrichtung 5 ausgehende Primärstrahlung, vgl. Laserstrahl 4, kann im Rahmen der Durchführung additiver Bauvorgänge derart reflektiert werden, dass diese zumindest abschnittsweise in ein die Prozesskammer 10 zumindest abschnittsweise begrenzendes Prozesskammerbegrenzungselement eindringt bzw. dieses zumindest abschnittsweise durchdringt. Bei der über die Erfassungseinrichtung 11 erfassbaren Laserstrahlung handelt es sich sonach typischerweise um, z. B. von einem bereits hergestellten Objekteabschnitt, reflektierte Sekundärstrahlung, vgl. Laserstrahl 4'.

Die Erfassungseinrichtung 11 umfasst ein oder mehrere Erfassungselement(e) 12, welche zur Erfassung des Eindringens von Laserstrahlung in ein die Prozesskammer 10 zumindest abschnittsweise begrenzendes Prozesskammerbegrenzungselement und/oder zur Erfassung des Durchdringens von Laserstrahlung durch ein die Prozesskammer 10 zumindest abschnittsweise begrenzendes Prozesskammerbegrenzungselement eingerichtet sind.

In dem in Fig. 2 gezeigten Ausführungsbeispiel ist ein Erfassungselement 12 in einer als gesonderte Bauteilgruppe an bzw. in einem Prozesskammerbegrenzungselement anordenbaren bzw. angeordneten, gehäuseartigen Tragstruktur 13 angeordnet. Die Tragstruktur 13 weist zumindest abschnittsweise einen mehrlagigen Aufbau auf, wobei das Erfassungselement 12 als Zwischenlage zwischen zwei Außenlagen (nicht näher bezeichnet) der Tragstruktur 13 in der Tragstruktur 13 angeordnet ist. Die Tragstruktur 13 kann ein Gehäuse bilden, in welchem das Erfassungselement 12 angeordnet ist. In die Tragstruktur 13 können weitere Bestandteile (nicht gezeigt) der Erfassungseinrichtung 11, d. h. z. B. Anschlussschnittstellen, z. B. zum Anschluss einer Energieversorgung, Datenübertragungsschnittstellen, z. B. zur Übertragung, d. h. zum Senden und/oder Empfangen von Daten, etc., integriert sein.

In dem in Fig. 2 gezeigten Ausführungsbeispiel ist die Tragstruktur 13 beispielhaft an bzw. in einem einen Einblick in die Prozesskammer 10 ermöglichenden Prozesskammerfensterelement 14 angeordnet. Das Prozesskammerfensterelement 14 kann einen Bestandteil eines eine Zugangsmöglichkeit in die Prozesskammer 10 schaffenden, insbesondere zwischen einer Offen- und einer Schließstellung, (schwenk)bewegbar, gelagerten Prozesskammertürelements sein.

Strichpunktiert, weil optional, dargestellt ist eine weitere Tragstruktur 13, welche an einer dem durch die Prozesskammer 10 begrenzten Innenraum zugewandten Innenfläche eines Prozesskammerbegrenzungselements angeordnet. Auch eine Anordnung einer weiteren Tragstruktur 13 an einer dem durch die Prozesskammer 10 begrenzten Innenraum abgewandten Außenfläche eines Prozesskammerbegrenzungselements wäre denkbar.

In dem in Fig. 3 gezeigten Ausführungsbeispiel ist ein Erfassungselement 12 direkt an oder in einem Prozesskammerbegrenzungselement angeordnet.

Das Erfassungselement 12 ist an einer dem durch die Prozesskammer 10 begrenzten Innenraum abgewandten Außenfläche eines Prozesskammerbegrenzungselements angeordnet.

Strichpunktiert, weil optional, dargestellt ist ein weiteres Erfassungselement 12, welches direkt in ein Prozesskammerbegrenzungselement integriert ist. Das Erfassungselement 12 ist in einem zumindest abschnittsweise einen mehrlagigen Aufbau aufweisenden Prozesskammerbegrenzungselement angeordnet oder ausgebildet, wobei es als Zwischenlage zwischen zwei Außenlagen des Prozesskammerbegrenzungselements in dem Prozesskammerbegrenzungselement angeordnet sein kann. Wiederum wäre auch eine Anordnung eines weiteren Erfassungselements 12 an einer dem durch die Prozesskammer 10 begrenzten Innenraum zugewandten Innenfläche eines Prozesskammerbegrenzungselements denkbar.

Für alle Ausführungsbeispiele gilt, dass ein jeweiliges Erfassungselement 12 zur (direkten oder indirekten) Erfassung von in ein Prozesskammerbegrenzungselement eindringender und/oder von ein Prozesskammerbegrenzungselement durchdringender Laserstrahlung, insbesondere von Laserstrahlung bestimmter Strahlungseigenschaften, bevorzugt einer bestimmten Wellenlänge, eingerichtet sein kann. Ein jeweiliges Erfassungselement 12 kann z. B. als eine, gegebenenfalls lichtleitende Strukturelemente umfassende, Sensorik zur Erfassung von Laserstrahlung, insbesondere Laserstrahlung bestimmter Strahlungseigenschaften, bevorzugt einer bestimmten Wellenlänge, ausgebildet sein.

Ein jeweiliges Erfassungselement 12 kann auch zur Erfassung einer laserstrahlungsbedingt abschnittsweise veränderlichen physikalischen Eigenschaft, insbesondere einer laserstrahlungsbedingt abschnittsweise veränderlichen elektrischen oder thermischen Eigenschaft, eines Prozesskammerbegrenzungselements eingerichtet sein. Ein jeweiliges Erfassungselement 12 kann z. B. als eine Sensorik zur Erfassung von Änderungen der elektrischen Eigenschaften, insbesondere der Leitfähigkeit, oder von Änderungen der thermischen Eigenschaften, insbesondere der Temperatur, eines Prozesskammerbegrenzungselements ausgebildet sein.

Ein jeweiliges Erfassungselement 12 kann auch zur Erfassung einer aus einem laserstrahlungsbedingten Materialabtrag eines Prozesskammerbegrenzungselements veränderlichen Atmosphäre innerhalb der Prozesskammer 10 eingerichtet sein. Ein jeweiliges Erfassungselement 12 kann z. B. als eine Sensorik zur Erfassung einer aus einem laserstrahlungsbedingten Materialabtrag eines Prozesskammerbegrenzungselements veränderlichen Atmosphäre bzw. veränderlichen atmosphärischen Zusammensetzung innerhalb der Prozesskammer 10 eingerichtet sein.

Ein jeweiliges Erfassungselement 12 kann auch zur Erfassung von aus einem laserstrahlungsbedingten Materialabtrag eines Prozesskammerbegrenzungselements entstehenden Partikeln, insbesondere Prozesskammerbegrenzungselementpartikeln, eingerichtet sein. Ein jeweiliges Erfassungselement 12 kann z. B. als eine Sensorik zur Erfassung von aus einem laserstrahlungsbedingten Materialabtrag eines Prozesskammerbegrenzungselements entstehenden Partikeln, insbesondere Prozesskammerbegrenzungselementpartikeln, (unabhängig von einer damit etwaig einhergehenden Änderung der Atmosphäre innerhalb der Prozesskammer 10) eingerichtet sein.

Für alle Ausführungsbeispiele gilt weiterhin, dass die Erfassungseinrichtung 11 (datenübertragungsmäßig) mit einer den Betrieb der Belichtungseinrichtung 5 und/oder der gesamten Vorrichtung 1 steuernden Steuereinrichtung 15 kommunizieren kann. Die Erfassungseinrichtung 11 ist bei Erfassung eines Eindringens von Laserstrahlung in ein die Prozesskammer 10 zumindest abschnittsweise begrenzendes Prozesskammerbegrenzungselement und/oder bei Erfassung eines zumindest abschnittsweisen Durchdringens von Laserstrahlung durch ein die Prozesskammer 10 zumindest abschnittsweise begrenzendes Prozesskammerbegrenzungselement zur Erzeugung einer Erfassungsinformation und zur Kommunikation dieser an die Steuereinrichtung 15 eingerichtet. Sowohl seitens der Erfassungseinrichtung 11 als auch seitens der Steuereinrichtung 15 sind geeignete Kommunikationsschnittstellen (nicht gezeigt) vorhanden, welche eine Übertragung von Erfassungsinformationen von der Erfassungseinrichtung 11 an die Steuereinrichtung 15 ermöglichen.

Die Steuereinrichtung 15 ist eingerichtet, bei Erhalt einer entsprechenden Erfassungsinformation (sofort) wenigstens eine Maßnahme zur Verhinderung des Eindringens von Laserstrahlung in das die Prozesskammer 10 zumindest abschnittsweise begrenzende Prozesskammerbegrenzungselement und/oder zur Verhinderung des zumindest abschnittsweisen Durchdringens von Laserstrahlung durch das die Prozesskammer 10 zumindest abschnittsweise begrenzende Prozesskammerbegrenzungselement durchzuführen. Bei einer entsprechenden Maßnahme kann es sich um ein Reduzieren der Leistung der von der Belichtungseinrichtung 5 erzeugten Laserstrahlung oder um ein Abschalten der Belichtungseinrichtung 5 oder um ein Abschalten der gesamten Vorrichtung 1 handeln.

Schließlich gilt für alle Ausführungsbeispiele, dass die Erfassungseinrichtung 11 mit einer Ausgabeeinrichtung 16 zur Ausgabe von Informationen an einen Benutzer kommunizieren kann, wobei die Erfassungseinrichtung 11 bei Erfassung eines Eindringens von Laserstrahlung in ein die Prozesskammer 10 zumindest abschnittsweise begrenzendes Prozesskammerbegrenzungselement und/oder bei Erfassung eines zumindest abschnittsweisen Durchdringens von Laserstrahlung durch ein die Prozesskammer 10 zumindest abschnittsweise begrenzendes Prozesskammerbegrenzungselement zur Erzeugung einer Erfassungsinformation und zur Kommunikation dieser an die Ausgabeeinrichtung 16 eingerichtet ist. Die Erfassungseinrichtung 11 und/oder die Ausgabeeinrichtung 16 können eingerichtet sein, eine die Erfassungsinformation betreffende Warninformation zu erzeugen und an einen Benutzer auszugeben.

Unter einer Ausgabe entsprechender Informationen kann eine direkte Ausgabe von die jeweilige Information betreffender, insbesondere akustischer und/oder optischer Signale, an einen Benutzer zu verstehen sein, wozu die Vorrichtung 1 über geeignete Signalausgabeeinrichtungen 17, d. h. z. B. Anzeigeeinrichtungen, Lautsprechereinrichtungen, etc., verfügt. Unter einer Ausgabe entsprechender Informationen kann auch eine, insbesondere funkbasierte, Übertragung jeweiliger Informationen an wenigstens ein benutzerseitiges (mobiles) Endgerät 19, d. h. z. B. einen Computer, ein Handy, ein Smartphone, ein Tablet-PC, etc., zu verstehen sein, wozu die Vorrichtung 1 über geeignete Datenübertragungsschnittstellen 18, d. h. z. B. Sendeeinrichtungen, verfügt.

## Patentansprüche

1. Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels Laserstrahlung verfestigbaren Baumaterial (3) in einer vorrichtungsseitigen Prozesskammer (10), umfassend eine Belichtungseinrichtung (5), welche zur Erzeugung von Laserstrahlung zur selektiven Belichtung und damit einhergehenden selektiven Verfestigung jeweiliger Baumaterialschichten eingerichtet ist, umfassend
eine wenigstens ein Erfassungselement (12) umfassende Erfassungseinrichtung (11), welche zur Erhöhung der Sicherheit der Vorrichtung (1) zur Erfassung des Eindringens von reflektierter Sekundärstrahlung in ein die Prozesskammer (10) zumindest abschnittsweise begrenzendes Prozesskammerbegrenzungselement und/oder zur Erfassung des Durchdringens von reflektierter Sekundärstrahlung durch ein die Prozesskammer (10) zumindest abschnittsweise begrenzendes Prozesskammerbegrenzungselement eingerichtet ist, wobei
das wenigstens eine Erfassungselement (12) an oder in einem Prozesskammerbegrenzungselement angeordnet oder ausgebildet ist, **dadurch gekennzeichnet, dass** das wenigstens eine Erfassungselement (12) in einem zumindest abschnittsweise einen mehrlagigen Aufbau aufweisenden Prozesskammerbegrenzungselement angeordnet oder ausgebildet ist, wobei es als Zwischenlage zwischen zwei Außenlagen des Prozesskammerbegrenzungselements in dem Prozesskammerbegrenzungselement angeordnet oder ausgebildet ist, oder dass
das wenigstens eine Erfassungselement (12) an oder in einer als gesonderte Bauteilgruppe an oder in einem Prozesskammerbegrenzungselement angeordneten, einen mehrlagigen Aufbau aufweisenden Tragstruktur (13) angeordnet oder ausgebildet ist, wobei das wenigstens eine Erfassungselement (12) als Zwischenlage zwischen zwei Außenlagen der Tragstruktur (13) in der Tragstruktur (13) angeordnet oder ausgebildet ist.

2. Vorrichtung nach Anspruch 1, **dadurch gekennzeichnet, dass** das wenigstens eine Erfassungselement (12)
zur Erfassung von in ein Prozesskammerbegrenzungselement eindringender und/oder von ein Prozesskammerbegrenzungselement durchdringender reflektierter Sekundärstrahlung bestimmter Strahlungseigenschaften, bevorzugt einer bestimmten Wellenlänge, eingerichtet ist, und/oder
zur Erfassung einer sekundärstrahlungsbedingt abschnittsweise veränderlichen physikalischen Eigenschaft, insbesondere einer sekundärstrahlungsbedingt abschnittsweise veränderlichen elektrischen oder thermischen Eigenschaft, eines Prozesskammerbegrenzungselements eingerichtet ist, und/oder zur Erfassung einer aus einem sekundärstrahlungsbedingten Materialabtrag eines Prozesskammerbegrenzungselements veränderlichen Atmosphäre innerhalb der Prozesskammer (10) eingerichtet ist, und/oder
zur Erfassung von aus einem sekundärstrahlungsbedingten Materialabtrag eines Prozesskammerbegrenzungselements entstehenden Partikeln, insbesondere Prozesskammerbegrenzungselementpartikeln, eingerichtet ist.

3. Vorrichtung nach Anspruch 1, **dadurch gekennzeichnet, dass** das wenigstens eine Erfassungselement (12) an einer der Prozesskammer (10) zugewandten, insbesondere freiliegenden, Innenfläche angeordnet oder ausgebildet ist oder an einer der Prozesskammer (10) abgewandten, insbesondere freiliegenden, Außenfläche eines Prozesskammerbegrenzungselements angeordnet oder ausgebildet ist.

4. Vorrichtung nach einem der vorhergehenden Ansprüche, **dadurch gekennzeichnet, dass** die oder wenigstens eine Tragstruktur (13) an einer der Prozesskammer (10) zugewandten, insbesondere freiliegenden, Innenfläche angeordnet oder ausgebildet ist oder an einer der Prozesskammer (10) abgewandten, insbesondere freiliegenden, Außenfläche eines Prozesskammerbegrenzungselements angeordnet oder ausgebildet ist.

5. Vorrichtung nach einem der vorhergehenden Ansprüche, **dadurch gekennzeichnet, dass** die Erfassungseinrichtung (11) mit einer den Betrieb der Belichtungseinrichtung (6) und/oder der Vorrichtung (1) steuernden Steuereinrichtung (15) kommuniziert, wobei die Erfassungseinrichtung (11) bei Erfassung eines Eindringens von reflektierter Sekundärstrahlung in ein die Prozesskammer (10) zumindest abschnittsweise begrenzendes Prozesskammerbegrenzungselement und/oder bei Erfassung eines zumindest abschnittsweisen Durchdringens von reflektierter Sekundärstrahlung durch ein die Prozesskammer (10) zumindest abschnittsweise begrenzendes Prozesskammerbegrenzungselement zur Erzeugung einer Erfassungsinformation und zur Kommunikation dieser an die Steuereinrichtung (15) eingerichtet ist.

6. Vorrichtung nach einem der vorhergehenden Ansprüche, **dadurch gekennzeichnet, dass** die Erfassungseinrichtung (11) mit einer Ausgabeeinrichtung (16) zur Ausgabe von Informationen, insbesondere an einen Benutzer, kommuniziert, wobei die Erfassungseinrichtung bei Erfassung eines Eindringens von reflektierter Sekundärstrahlung in ein die Prozesskammer (10) zumindest abschnittsweise begrenzendes Prozesskammerbegrenzungselement und/oder bei Erfassung eines zumindest abschnittsweisen Durchdringens von reflektierter Sekundärstrahlung durch ein die Prozesskammer (10) zumindest abschnittsweise begrenzendes Prozesskammerbegrenzungselement zur Erzeugung einer Erfassungsinformation und zur Kommunikation dieser an die Ausgabeeinrichtung (16) eingerichtet ist.

7. Vorrichtung nach einem der vorhergehenden Ansprüche, **dadurch gekennzeichnet, dass** ein Prozesskammerbegrenzungselement ein die Prozesskammer (10) abschnittsweise begrenzendes Prozesskammerwandungselement ist, oder
ein Prozesskammerbegrenzungselement ein einen Einblick in die Prozesskammer (10) ermöglichendes Prozesskammerfensterelement ist, oder
ein Prozesskammerbegrenzungselement ein eine Zugangsmöglichkeit in die Prozesskammer (10) schaffendes, insbesondere zwischen einer Offen- und einer Schließstellung, bewegbar, insbesondere schwenkbewegbar, gelagertes Prozesskammertürelement ist.

## Claims

1. Device (1) for the additive production of three-dimensional objects (2) by successive layer-by-layer selective exposure and concomitant successive layer-by-layer selective solidification of building material layers from a building material (3) solidifiable by means of laser radiation in a processing chamber (10) on the device side, comprising an illuminating device (5) which is set up to generate laser radiation for the selective exposure and concomitant selective solidification of respective building material layers, comprising
a detection device (11) comprising at least one detection element (12), which, in order to increase the safety of the apparatus (1), is set up to detect the penetration of reflected secondary radiation into a process chamber boundary element bounding the process chamber (10) at least in sections and/or to detect the penetration of reflected secondary radiation through a process chamber boundary element bounding the process chamber (10) at least in sections, wherein
the at least one detection element (12) is arranged or formed on or in a process chamber boundary element, **characterized in that** the at least one detection element (12) is arranged or formed in a process chamber boundary element having, at least in sections, a multilayer structure, it being arranged or formed as an intermediate layer between two outer layers of the process chamber boundary element in the process chamber boundary element, or **in that**
the at least one detection element (12) is arranged or formed on or in a support structure (13) arranged as a separate component group on or in a process chamber delimiting element and having a multilayer structure, the at least one detection element (12) being arranged or formed as an intermediate layer between two outer layers of the support structure (13) in the support structure (13).

2. Device according to claim 1, **characterized in that** the at least one detection element (12)
is set up for detecting secondary radiation of specific radiation properties, preferably of a specific wavelength, penetrating into a process chamber boundary element and/or reflected by a process chamber boundary element, and/or
is set up to detect a physical property of a process chamber limiting element which varies in sections as a result of secondary radiation, in particular an electrical or thermal property which varies in sections as a result of secondary radiation, and/or
is set up to detect an atmosphere within the process chamber (10) that varies as a result of material removal from a process chamber boundary element due to secondary radiation, and/or
is set up to detect particles, in particular process chamber limiting element particles, resulting from a material removal of a process chamber limiting element caused by secondary radiation.

3. Device according to claim 1, **characterized in that** the at least one detection element (12) is arranged or formed on an inner surface, in particular an exposed inner surface, facing the process chamber (10) or is arranged or formed on an outer surface, in particular an exposed outer surface, of a process chamber boundary element facing away from the process chamber (10).

4. Device according to one of the preceding claims, **characterized in that** the or at least one support structure (13) is arranged or formed on an inner surface, in particular an exposed inner surface, facing the process chamber (10) or is arranged or formed on an outer surface, in particular an exposed outer surface, of a process chamber boundary element facing away from the process chamber (10).

5. Device according to one of the preceding claims, **characterized in that** the detection device (11) communicates with a control device (15) controlling the operation of the exposure device (6) and/or of the device (1), wherein the detection device (11), upon detection of penetration of reflected secondary radiation into a process chamber boundary element bounding the process chamber (10) at least in sections and/or upon detection of penetration of reflected secondary radiation through a process chamber boundary element bounding the process chamber (10) at least in sections, is set up to generate detection information and to communicate this to the control device (15).

6. Device according to one of the preceding claims, **characterized in that** the detection device (11) communicates with an output device (16) for outputting information, in particular to a user, wherein the detection device, upon detection of penetration of reflected secondary radiation into a process chamber boundary element bounding the process chamber (10) at least in sections and/or upon detection of penetration of reflected secondary radiation through a process chamber boundary element bounding the process chamber (10) at least in sections, is set up to generate detection information and to communicate this to the output device (16).

7. Device according to one of the preceding claims, **characterized in that** a process chamber delimiting element is a process chamber wall element delimiting the process chamber (10) in sections, or
a process chamber boundary element is a process chamber window element allowing a view into the process chamber (10), or
a process chamber boundary element is a process chamber door element which creates an access possibility into the process chamber (10) and is mounted movably, in particular pivotably, between an open position and a closed position.

## Revendications

1. Dispositif (1) pour la fabrication additive d'objets tridimensionnels (2) par exposition sélective successive couche par couche et par consolidation sélective successive couche par couche de couches de matériau de construction à partir d'un matériau de construction (3) pouvant être consolidé au moyen d'un rayonnement laser dans une chambre de traitement (10) située du côté du dispositif, comprenant un dispositif d'exposition (5) qui est conçu pour produire un rayonnement laser pour l'exposition sélective et la consolidation sélective correspondante de couches de matériau de construction respectives, comprenant
un dispositif de détection (11) comprenant au moins un élément de détection (12), qui, pour augmenter la sécurité du dispositif (1), est conçu pour détecter la pénétration d'un rayonnement secondaire réfléchi dans un élément de délimitation de la chambre de traitement (10) délimitant au moins une partie de celle-ci et/ou pour détecter la pénétration d'un rayonnement secondaire réfléchi à travers un élément de délimitation de la chambre de traitement (10) délimitant au moins une partie de celle-ci, où
le au moins un élément de détection (12) est disposé ou formé sur ou dans un élément de délimitation de chambre de traitement, **caractérisé en ce que** le au moins un élément de détection (12) est disposé ou formé dans un élément de délimitation de chambre de traitement présentant au moins par sections une structure à plusieurs couches, en étant disposé ou formé dans l'élément de délimitation de chambre de traitement comme couche intermédiaire entre deux couches extérieures de l'élément de délimitation de chambre de traitement, ou **en ce que**
le au moins un élément de détection (12) est disposé ou formé sur ou dans une structure de support (13) présentant une structure à plusieurs couches et disposée comme groupe de composants séparé sur ou dans un élément de délimitation de chambre de traitement, le au moins un élément de détection (12) étant disposé ou formé comme couche intermédiaire entre deux couches extérieures de la structure de support (13) dans la structure de support (13).

2. dispositif selon la revendication 1, **caractérisé en ce que** l'élément de détection (12) au moins unique
est conçu pour détecter un rayonnement secondaire réfléchi pénétrant dans un élément de délimitation de la chambre de traitement et/ou traversant un élément de délimitation de la chambre de traitement et ayant des propriétés de rayonnement déterminées, de préférence une longueur d'onde déterminée, et/ou
est conçu pour détecter une propriété physique d'un élément de limitation de la chambre de traitement qui varie par sections en fonction du rayonnement secondaire, en particulier une propriété électrique ou thermique qui varie par sections en fonction du rayonnement secondaire, et/ou
est conçu pour détecter une atmosphère à l'intérieur de la chambre de traitement (10) qui varie en raison de l'enlèvement de matière d'un élément de délimitation de la chambre de traitement dû à un rayonnement secondaire, et/ou
est conçu pour détecter des particules, en particulier des particules d'éléments de limitation de la chambre de traitement, résultant d'un enlèvement de matière d'un élément de limitation de la chambre de traitement dû à un rayonnement secondaire.

3. dispositif selon la revendication 1, **caractérisé en ce que** l'au moins un élément de détection (12) est disposé ou formé sur une surface intérieure, en particulier exposée, tournée vers la chambre de traitement (10) ou est disposé ou formé sur une surface extérieure, en particulier exposée, d'un élément de limitation de la chambre de traitement, opposée à la chambre de traitement (10).

4. Dispositif selon l'une des revendications précédentes, **caractérisé en ce que** la ou au moins une structure de support (13) est disposée ou formée sur une surface intérieure, en particulier exposée, tournée vers la chambre de traitement (10) ou est disposée ou formée sur une surface extérieure, en particulier exposée, d'un élément de délimitation de la chambre de traitement, opposée à la chambre de traitement (10).

5. Dispositif selon l'une des revendications précédentes, **caractérisé en ce que** le dispositif de détection (11) communique avec un dispositif de commande (15) commandant le fonctionnement du dispositif d'exposition (6) et/ou du dispositif (1), le dispositif de détection (11) étant conçu, en cas de détection d'une pénétration de rayonnement secondaire réfléchi dans un élément de délimitation de la chambre de traitement (10) délimitant au moins une partie de celle-ci et/ou en cas de détection d'une pénétration au moins partielle de rayonnement secondaire réfléchi à travers un élément de délimitation de la chambre de traitement délimitant au moins une partie de celle-ci, pour générer une information de détection et pour communiquer celle-ci au dispositif de commande (15).

6. Dispositif selon l'une des revendications précédentes, **caractérisé en ce que** le dispositif de détection (11) communique avec un dispositif de sortie (16) pour la sortie d'informations, en particulier à un utilisateur, le dispositif de détection étant conçu, lors de la détection d'une pénétration de rayonnement secondaire réfléchi dans un élément de délimitation de la chambre de traitement (10) délimitant au moins une partie de celle-ci et/ou lors de la détection d'une pénétration au moins partielle de rayonnement secondaire réfléchi à travers un élément de délimitation de la chambre de traitement délimitant au moins une partie de celle-ci, pour générer une information de détection et pour communiquer celle-ci au dispositif de sortie (16).

7. Dispositif selon l'une des revendications précédentes, **caractérisé en ce qu'**un élément de délimitation de la chambre de traitement est un élément de paroi de la chambre de traitement délimitant la chambre de traitement (10) par sections ou
un élément de limitation de la chambre de traitement est un élément de fenêtre de la chambre de traitement permettant de voir à l'intérieur de la chambre de traitement (10), ou
un élément de limitation de la chambre de traitement est un élément de porte de la chambre de traitement qui crée une possibilité d'accès dans la chambre de traitement (10), en particulier qui est monté de manière mobile, en particulier de manière pivotante, entre une position ouverte et une position fermée.
